# EUROPEAN PATENT APPLICATION

(11) **EP 2 708 146 A1**
(43) Date of publication of application: **19.03.2014**
(21) Application number: 12382360.1
(22) Date of filing: 17.09.2012
(51) Int. Cl.: A23L 1/29, A23L 1/30, A61K 31/202

(54) **Nutritional composition for pregnant women with a beneficial glucose and insulin profile**

(71) Applicant: Abbott Laboratories, Inc., Abbott Park, IL 60064 (US)
(72) Inventor: Dewille, Normanella T, COLUMBUS, OH Ohio 43220 (US); Rueda Cabrera, Ricardo, 18008 GRANADA (ES); Marriage, Barbara J, COLUMBUS, OH Ohio 43214 (US); Sherry, Christina, COLUMBUS, OH Ohio 43219 (US); Wearly, Douglas J., BLACKLICK, OH Ohio 43004 (US); Lopez Pedrosa, Jose Maria, 18190 CENES DE LA VEGA (Granada) (ES); Blumberg, Rachel M., DUBLIN, OH Ohio 43017 (US); Mazer, Terry B., NEW ALBANY, OH Ohio 43054 (US)
(74) Representative: Ungria López, Javier

(57) **Abstract**

The present disclosure is directed to a nutritional powder, a translucent reconstitutable beverage formed therefrom, and methods relating thereto. The nutritional powder and beverage are adapted to include the proper balance of proteins, lipids, carbohydrates, vitamins and minerals appropriate for a pregnant woman. The nutritional compositions further stem the glycemic response and improve glycemia and insulinemia during gestational and lactating periods for preventing or reduce the incidence of glucose intolerance later in life.

## Description

### BACKGROUND OF THE INVENTION

### Field of the Invention

The present invention relates generally to a nutritional composition, and more specifically a nutritional powder, a substantially translucent reconstitutable beverage, and various methods relating thereto.

### Description of the Background of the Invention

A variety of nutritional supplements are available today and typically contain a mixture of proteins, carbohydrates, lipids, vitamins, and minerals tailored to the nutritional needs of the intended user. The nutritional supplements are provided in various product forms including ready-to-drink liquids, reconstitutable powders, capsules and pills, and the like. Among the many nutritional supplements available today, supplements tailored to pregnant women have become particularly well known and are commonly used to provide specialized nutritional supplements that are beneficial for both the mother and the unborn child.

Supplements are known to provide advantages to an embryo *in utero.* For example, docosahexaenoic acid (DHA) is commonly found in breast milk and is well-known for its health benefits. DHA is a long-chain omega-3 fatty acid that is necessary for brain and eye development of both children and adults and is related to growth, learning ability, and neurological and visual development in children. Humans synthesize only small quantities of DHA so it is often desirable to obtain DHA from nutritional supplements.

Pregnant women face numerous obstacles in obtaining DHA and other critical nutrients in a way that does not negatively impact their diet or lifestyle. There are very few nutritional beverages available for pregnant women, and the beverages that have previously been available have been limited by consistency and flavor. Nutritional beverages for pregnant women typically have been provided in the form of a thick, shake-like product. Therefore, forming a liquid product that includes an appropriate amount of protein, carbohydrates, vitamins and minerals suitable for pregnant women has previously required that the nutritional beverage be provided as a viscous, shake-type product.

Shake products are substantially opaque and have a viscosities typically greater than about 25 cp. Translucency of shake products may be characterized using the Agtron color scale (from 0-100) by a score of greater than about 30. More often, shake products have a score of greater than 40 on the Agtron color scale. In comparison, purified water may be characterized by a score of about 0 on the Agtron color scale.

Viscous shake products suffer from numerous drawbacks however. In particular, pregnant women have heightened taste sensory during pregnancy so the chalky taste and appearance of shake products may be distasteful or unpleasant. Further, the shake products are typically lower in protein, higher in fat, contain an undesirable amount of calories, and are generally displeasing because of their thick appearance. Further, shakes are limited in the types of flavoring that can be employed, which limits the variety of flavors available to a pregnant woman. Still further, shake products are displeasing and inconvenient to drink in warmer climates. Finally, many nutritional supplements that are available for pregnant women are milk-based, which is a problem for women who suffer with lactose intolerance.

In contrast, reconstitutable powders have become popular to try to overcome the aforementioned drawbacks of shake products. In particular, powder products are formed using methods known in the art and are adapted to be mixed with an aqueous liquid such as water prior to consumption to form a nutritional beverage. However, reconstitutable powders known in the art suffer from numerous drawbacks as well. For example, clarity issues with the nutritional beverage product have previously prevented powder manufacturers from being able to provide sufficient amounts of protein, carbohydrates, vitamins, and minerals that pregnant women need. Thus, some powder manufacturers of the prior art sacrifice quantity and include an insufficient amount of proteins, lipids, and nutrients in the reconstitutable powder products to form a substantially translucent product that pregnant women find appealing. There is a correlation between the quantity and types of components in the nutritional supplement, and the visual appearance of the nutritional supplement. In particular, the higher the level of protein, DHA, nutrients and other sources in the nutritional supplement, the more opaque, cloudy, and viscous the supplement.

A further obstacle pregnant women face is gestational diabetes, which is defined as any degree of glucose intolerance with onset or recognition during pregnancy. According to the World Health Organization, over 346 million people worldwide suffer from diabetes. Diabetes can be caused by resistance to insulin (a hormone produced to control blood sugar), too little insulin, or both. Carbohydrates contain carbon, oxygen, and hydrogen and are responsible for many processes in the human body. Carbohydrates are contained in many foods and beverages, the consumption of which directly impact blood glucose levels. In particular, carbohydrates make blood glucose levels rise after consumption.

The prevalence of obesity and glucose intolerance in adolescents and adults has increased rapidly over the past 20 years in the United States and globally and continues to rise. Obesity is classically defined based on the percentage of body fat or, more recently, the body mass index or BMI. The BMI is defined as the ratio of weight in kilograms divided by the height in meters, squared. As obesity becomes more prevalent in all age groups, it is inevitable that the number of women giving birth who are also overweight and/or diabetic will also increase. It is known that overweight and obese women who become pregnant have a greater risk of developing gestational diabetes. Maternal hyperglycemia may lead to infants with increased body size and fat mass and such infants are themselves prone to develop obesity and diabetes later in life, including during adolescence and adulthood. Additionally, research has suggested that obese women who themselves have normal glucose tolerance give birth to infants with a higher fat mass than those born to women who are not obese.

It would therefore be desirable to provide nutritional compositions and methods that could reduce the incidence or risk of multiple diseases or conditions, such as obesity, glucose intolerance, and related co-morbidities associated to metabolic syndrome (cardiovascular disease and hypertension). It would be further beneficial is such compositions were provided in a form that were appealing to pregnant women. Namely, it would be beneficial if the nutritional compositions were provided in a substantially translucent, substantially non-viscous form in flavors that are appealing to pregnant women.

The nutritional compositions and associated methods provided herein are specifically contemplated for use by pregnant women. It would therefore be desirable to formulate a reconstitutable nutritional powder and associated beverage that includes the proper balance of proteins, lipids, carbohydrates, vitamins and minerals appropriate for a pregnant woman. It is further desirable to provide a nutritional composition in the form of a powder adapted to be reconstituted, which forms a substantially transparent non-viscous beverage that is refreshing. The compositions further stem the glycemic response and improve glycemia and insulinemia during gestational and lactating periods for preventing or reducing the incidence of glucose intolerance later in life. The present disclosure is further directed to methods of preparing the nutritional compositions described herein.

### SUMMARY OF THE INVENTION

In one embodiment of the invention, a nutritional powder comprises a protein source in an amount between about 2 grams to about 15 grams/100 kcal of the nutritional powder. The nutritional powder further comprises a carbohydrate system in an amount between about 12 to about 20 grams/100 kcal of the nutritional powder. The carbohydrate system is provided as a carbohydrate blend that includes from about 60% to about 70% by weight slow rate of digestion simple carbohydrate, from about 6% to about 10% by weight complex carbohydrate, from about 5% to about 20% by weight nonabsorbent carbohydrate, and from about 2% to about 15% by weight indigestible carbohydrate. A lipid source is included in an amount between about 0.2 to about 0.8 grams/100 kcal of the nutritional powder. The lipid source further includes about 50 to about 100 milligrams/100kcal of docosahexaenoic acid (DHA).

In a different embodiment of the invention, a translucent nutritional beverage comprises a protein source in an amount between about 6 grams to about 10 grams/100 kcal of the beverage and a carbohydrate system in an amount between about 12 to about 20 grams/100 kcal of the beverage. The carbohydrate system is provided as a carbohydrate blend that includes from about 60% to about 70% by weight slow rate of digestion simple carbohydrate, from about 6% to about 10% by weight complex carbohydrate, from about 5% to about 20% by weight nonabsorbent carbohydrate, and from about 2% to about 15% by weight indigestible carbohydrate. The translucent nutritional beverage further includes a lipid source in an amount between about 0.2 to about 0.8 grams/100 kcal of the beverage.

In another embodiment of the invention, a method of reconstituting a powder to form a substantially translucent nutritional beverage comprises the step of dissolving a nutritional powder in an aqueous liquid. The powder includes a protein source in an amount between about 6 grams to about 10 grams/100 kcal of the nutritional powder, a carbohydrate source in an amount between about 12 to about 20 grams/100 kcal of the nutritional powder, and a lipid component in an amount between about 0.2 to about 0.8 grams/100 kcal of the nutritional powder. The translucent nutritional beverage that is yielded has between about 12 to about 24 total kcal/ounce.

These and other aspects of the invention will become apparent in light of the following detailed description.

### BRIEF DESCRIPTION OF THE DRAWING

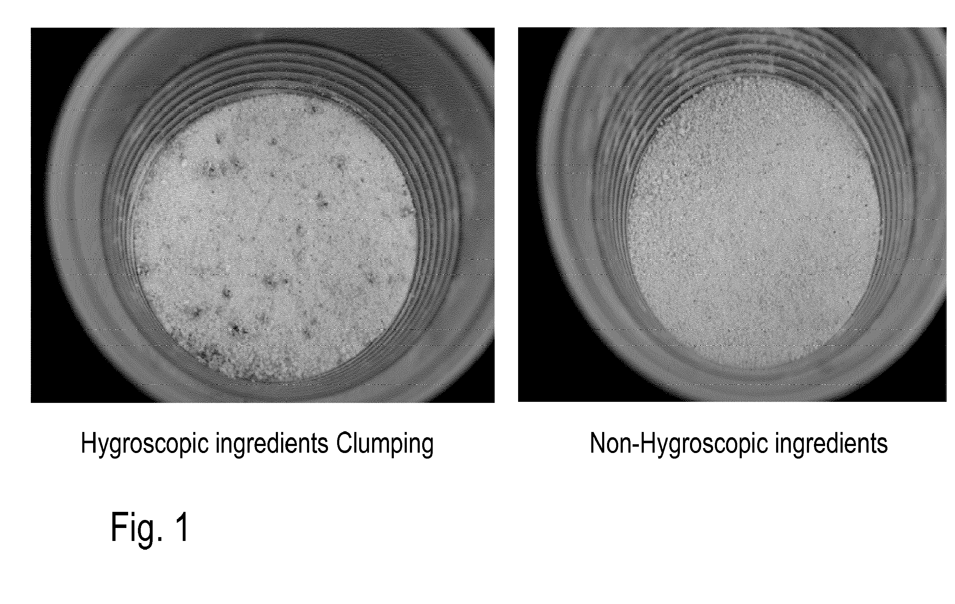

FIG. 1 illustrates the clumping propensity of a control nutritional formula having hygroscopic components in comparison to the non-clumping nutritional formula of the present disclosure that utilizes at least one non-hygroscopic ingredient.

### DETAILED DESCRIPTION

The term "adult" as used herein refers to adults and children about 12 years and older.

The term "nutritional powder" as used herein, unless otherwise specified, refers to a powdered nutritional composition that is designed for pregnant adults, obese adults, or combinations thereof, that contains sufficient nutrients such as proteins, carbohydrates, lipids, vitamins, and minerals to serve as a supplement, primary, or sole source of nutrition.

All percentages, parts and ratios as used herein, are by weight of the total composition, unless otherwise specified. All such weights as they pertain to listed components are based on the active level and, therefore, do not include solvents or by-products that may be included in commercially available materials, unless otherwise specified.

Numerical ranges as used herein are intended to include every number and subset of numbers within that range, whether specifically disclosed or not. Further, these numerical ranges should be construed as providing support for a claim directed to any number or subset of numbers in that range. For example, a disclosure of from 1 to 10 should be construed as supporting a range of from 2 to 8, from 3 to 7, from 5 to 6, from 1 to 9, from 3.6 to 4.6, from 3.5 to 9.9, and so forth.

All references to singular characteristics or limitations of the present disclosure shall include the corresponding plural characteristic or limitation, and vice versa, unless otherwise specified or clearly implied to the contrary by the context in which the reference is made.

All combinations of method or process steps as used herein can be performed in any order, unless otherwise specified or clearly implied to the contrary by the context in which the referenced combination is made.

The nutritional powders and corresponding manufacturing methods of the present disclosure can comprise, consist of, or consist essentially of the essential elements and limitations of the disclosure as described herein, as well as any additional or optional components, sources, or limitations described herein or otherwise useful in nutritional powdered applications.

### GENERAL

The nutritional powder of the present disclosure includes at least one protein source, at least one lipid source such as DHA, at least one carbohydrate, vitamins, minerals, and optionally includes additives such as flavoring and stabilizers. The nutritional powder is adapted to be reconstituted using an aqueous liquid. The quantities of the individual sources are selected to provide sufficient amounts of nutrients to a pregnant woman as well as providing preferred characteristics of translucency, pH, viscosity, and cake strength, as discussed herein. The amounts are further selected to assist in controlling post-consumption glucose levels.

### PROTEIN SOURCE

The nutritional powder preferably includes at least one protein source. The protein source comprises at least one protein and optionally includes a mixture of protein sources. Proteins useful in the powder described herein include milk, soy, rice, meat, vegetable, egg, gelatin, and fish. Suitable proteins include, but are not limited to, soy based, milk based, casein protein, whey protein, rice protein, vegetable protein (i.e., potato protein, pea protein, canola protein) and mixtures thereof. The protein source may be provided in concentrate form, hydrolysate form, or isolate form, however the isolate form is particularly preferred for the reasons discussed herein.

The protein source of the nutritional powder preferably comprises whey protein. Whey is a natural dairy protein that stems from the cheese making process, which is a byproduct from cow's milk. Whey protein provides significant advantages over other types of protein because it contains all of the essential amino acids required in the daily diet, is more soluble than other proteins, is easily and rapidly digestible, and typically includes bioactive proteins such as lactoglobulins, immunoglobulins, alpha-lacatlbumin, bovine serum albumin, lactoperoxidase, and lactoferrins. Whey protein further includes branched chain amino acids (BCAAs), which are known to assist with protein synthesis.

Many proteins, including whey, are provided in either the isolate form or the concentrate form. Whey protein concentrates include significant amounts of whey proteins, but further include lactose and fat, which may be undesirable. Whey protein concentrate is a mixture in which the amount of the whey proteins is between about 25% and less than about 80%. In contrast, whey protein isolate is a mixture in which at least about 80% of the solids are whey proteins. Whey protein isolates are preferred because they can be purified to remove lactose, fat, cholesterol, carbohydrates, and any other undesirable components prior to inclusion in the nutritional powder of the present disclosure. Therefore, whey protein isolates typically include whey protein with minimal amounts of lactose and fat.

One advantage of whey proteins over other types of proteins is the stability that whey proteins demonstrate in a variety of processing conditions. For example, whey proteins are soluble and have an isoelectric point of about 4.5. The isoelectric point being the pH in which the net charge of the protein is 0. Whey proteins are known to remain soluble over a wide range of pH's, including at their isoelectric points, which make them preferred for use in the nutritional powder of the present disclosure over numerous other proteins. Therefore, any protein that remains substantially clear when utilized in a low pH solution (i.e., between about 1 pH to about 6 pH) is preferable for use in the powder and beverage disclosed herein as opposed to any protein that precipitates in a low pH solution. Whey protein isolates useful in the present disclosure preferably remain soluble at their isoelectric points such that the beverage remains substantially clear when the protein is dissolved therein. The whey protein isolate should also be heat stable during pasteurization and have excellent stability and solubility properties in an acidic solution. The whey protein isolate further should be easily digestible and provide a good source of proteins and amino acids, as described above. Any proteins meetings such requirements would be useful for use in the nutritional powders disclosed herein.

Suitable proteins for use in the nutritional powder of the present disclosure are, for example, any of the 9000 series whey protein isolates, such as Hilmar™ 9420 whey protein isolate supplied from Hilmar Ingredients (Hilmar, California, United States). The whey protein isolate preferably includes at least about 80% protein by dry weight, less than about 5 % lactose, and less than about 1% fat. The moisture content of the whey protein isolate is typically about 4% and includes a protein efficiency ratio of about 3. A typical amino acid profile of a preferred whey protein isolate is shown in Table 1. Various other proteins may be useful for use in the powder and beverage disclosed herein. For example, a soy protein isolate sold under the trade name Clarisoy™supplied by Archer Daniels Midland (Decatur, Illinois) may be useful in the powder and beverage of the present disclosure.

**TABLE 1**

| A typical amino acid profile of a whey protein isolate useful as the protein source in the nutritional powder of the present disclosure. | |
|---|---|
| Amino Acid | Amount represented as g/100g of product * |
| Alanine | 3-5 |
| Arginine | 2-4 |
| Aspartic Acid | 8-12 |
| Cystine/Cysteine | 1-3 |
| Glutamic Acid | 16-19 |
| Glycine | 1-3 |
| Histidine | 1-3 |
| Hydroxyproline | 0-2 |
| Isoleucine | 4-7 |
| Leucine | 8-12 |
| Methionine | 2-5 |
| Phenylalanine | 1-4 |
| Proline | 4-7 |
| Serine | 3-6 |
| Threonine | 5-8 |
| Tryptophan | 1-3 |
| Tyrosine | 1-4 |
| Valine | 4-7 |

| | |
|---|---|
| *All numbers in the chart are proceeded by the term "about." | |

The protein source additionally comprises a fatty acid source. One suitable fatty acid profile of the protein source as represented by g/100 g of the protein source includes between about .08 and about .14 saturated fatty acids, between about .01 and about .06 monosaturated fatty acids, between about .04 and about .08 polyunsaturated fatty acids, and less than about .01 trans fatty acids. Further, the ratio of saturated fatty acids to monosaturated fatty acids is about 8:1, or about 7:1, or about 6:1, or about 5:1, or about 4:1, or about 3:1, or about 2:1. The ratio of monosaturated fatty acids to polyunsaturated fatty acids is about 1:4, or about 1:5, or about 1:6, or about 1:7, or about 1:8, or about 3:4, or about 3:1, or about 3:2.

As disclosed herein, the protein source may be provided as a single protein source or may be a combination of various protein sources. In one embodiment, the protein source is provided as whey protein isolate. In a different embodiment, the protein source is provided as a mixture of a vegetable protein and a whey protein. In a further embodiment, the protein source is provided as a soy protein isolate. In still a further embodiment, the protein source is provided as a mixture of a soy protein isolate and a whey protein isolate. In another embodiment, the protein source is provided as a vegetable protein and a soy protein isolate. In a further embodiment, the protein source is provided as a vegetable protein.

Generally, the protein source is included in the nutritional powder in an amount (by weight of the nutritional powder) of from about 5% to about 40%, or from about 5% to about 35%, or from about 5% to about 33%, or from about 15% to about 35%, or from about 10% to about 40%, or from about 10% to about 35%, or from about 10% to about 33%, or from about 10% to about 30%, or from about 20% to about 40%, or from about 20% to about 35%, or from about 20% to about 30%, or from about 25% to about 35%, or from about 25% to about 30%, or from about 25% to about 32%, or from about 28% to about 32%, or from about 29% to about 33%, or about 31% to about 33%. In some embodiments, the protein may be included in the nutritional powder in a specific amount of about 5%, about 10%, about 15%, about 20%, about 25%, about 28%, about 29%, about 30%, about 31%, about 32%, about 33%, about 34%, or about 35%, or about 36%, or about 37%, or about 38%, or about 39% (by weight of the nutritional powder). Preferably, the protein source does not comprise more than about 41% of the nutritional powder because the reconstituted beverage formed by the nutritional powder may become excessively cloudy and the beverage flavor may be compromised, which are both undesirable characteristics with respect to the reconstituted beverage of the present disclosure. Without being bound by theory, it is thought that the higher the protein content of the nutritional powder (i.e., greater than about 50% by weight of the nutritional powder), typically the more obstacles that are presented with respect to maintaining a substantially translucent beverage that has been formed from reconstituting the nutritional powder. However, it is possible that a larger amount of the protein source could be present in the nutritional beverage so long as the greater than about 50% amount of protein source does not negatively impact the translucency of the nutritional beverage.

A further way of characterizing the protein source is through the amount of protein present in relation to the calories of the reconstituted beverage. In particular, the protein source of the present disclosure is included in an amount between about 2 grams to about 15 grams/100 kcal, or about 5 grams to about 12 grams/100 kcal, or about 6 grams to about 10 grams/100 kcal of the nutritional powder. In some embodiments, the protein source is provided in the nutritional powder in an amount of about 6 grams/100 kcal, or about 7 grams/100 kcal, or about 8 g/100 kcal, or about 9 g/100 kcal, or about 10 g/100 kcal.

The protein source may be prepared in manners known in the nutritional art. For example, the protein source may be supplied in powder form after undergoing a spray-dry process, which is a method of producing a powder by rapidly drying a slurry or liquid with a hot gas. In its final, powder form, the protein source preferably is homogenous, substantially non-caking, substantially non-clumping, and free flowing.

### LIPID SOURCE

The nutritional powder of the present disclosure further includes at least one lipid source. Suitable lipid sources include, but are not limited to, coconut oil, soy oil, corn oil, olive oil, safflower oil, high oleic safflower oil, MCT oil (medium chain triglycerides), sunflower oil, oleic sunflower oil, palm oil, palm olein, and canola oil. A preferred lipid source of the nutritional powder comprises at least one fatty acid, and more particularly, comprises at least one omega-3 fatty acid. Other types of essential and fatty acids may be used alone or in combination with omega-3 fatty acids such as, for example, omega-6 and omega 9 fatty acids. Types of fatty acids useful for inclusion in the nutritional powder include, for example, docosahexaenoic acid (DHA), docosapentaenoic acid (DPA), arachidonic acid (ARA), alpha-linolenic acid (ALA), eicosapentaenoic acid (EPA), eicosatetraenoic acid (ETA), stearidonic acid (SDA) and heneicosapentenoic acid.

A particularly useful fatty acid useful for the nutritional powder of the present disclosure is DHA. DHA is a long-chain omega-3 fatty known for its nutritional benefits to adults, embryos, and children as described herein. Lipid sources of DHA include, but are not limited to, marine/fish oil, egg yolk oil, squid oil, and plant oils including echium oil, flaxseed oil, and fungal oil.

Marine/fish oils are oils that are obtained from aquatic animals, plants or organisms, either directly or indirectly, particularly from oily fish. Marine oils include, for example, herring oil, cod oil, anchovy oil, tuna oil, sardine oil, menhaden oil and algae oil. Although omega-3 fatty acids can be obtained from other sources, such as plant oils, fish have a unique ability to provide high levels of the omega-3 fatty acids DHA and EPA.

Although DHA and other optionally included fatty acids may be supplied in any form, DHA and other optional fatty acids are preferably supplied as a microencapsulated fish oil powder. The microencapsulation assists in preventing an unpleasant fishy-odor in the nutritional powder and the resulting beverage formed by reconstituting the nutritional powder. A suitable microencapsulated fish oil powder is, for example, MEG-3® powder supplied by Ocean Nutrition Canada (Nova Scotia, Canada). Although DHA is specifically contemplated, other fatty acids providing nutritional benefits consistent with the disclosure herein may be useful for inclusion in the nutritional powder disclosed herein.

In one embodiment, the lipid source comprises a fatty acid. In a different embodiment, the lipid source comprises DHA. In yet a different embodiment, the lipid source comprises DHA and EPA. In another embodiment, the lipid source comprises DHA in conjunction with any other fatty acid. In embodiments having DHA and EPA, the lipid source includes DHA in an amount of at least about 132 mg/g, in conjunction with EPA in an amount of about 36 mg/g to about 72 mg/g.

Generally, the lipid source is included in the nutritional powder in an amount (by weight of the nutritional powder) of from about .01% to about 3%, or from about .01% to 2, or from about .05% to about 1%, or from about .025% to about 2%, or from about .0150% to about .0175%, or from about .0150% to about .0190 %, or from about .01% to about .02%, or from about .015 % to about .02%, or from about .0170% to about .0180%, or from about .015% to about .02%, or from about .001% to about .02%, or from about 0% to about .02%, or from about .01% to about .02%. In some embodiments, the lipid source is included in the nutritional powder in a specific amount of about .01%, about .015%, about .016%, about .017%, about .0175%, about .018%, about .0185%, about .019%, about .2%, about .3%, about .4%, or about .5%, or greater than .5% (by weight of the nutritional powder). Preferably, the lipid source does not constitute more than about 4% by weight of the nutritional powder because a greater quantity of lipids increase the turbidity of the beverage.

The lipid source of the present disclosure is included in an amount between about .1 grams to about 1 grams/100 kcal, or about .2 grams to about .8 grams/100 kcal, or about .3 grams to about .6 grams/100 kcal of the nutritional powder. In some embodiments, the lipid source is provided in the nutritional powder in an amount of about .2 grams/100 kcal, or about .3 grams/100 kcal, or about .4 g/100 kcal, or about .5 g/100 kcal, or about .6 g/100 kcal, or about .7 g/100 kcal.

### CARBOHYDRATE SOURCE

The nutritional powders of the present disclosure further include at least one carbohydrate source, and more preferably include a carbohydrate system chosen to control post-meal glucose and insulin response. Suitable carbohydrate systems typically include one or more of slow digesting simple carbohydrates, complex carbohydrates, non-absorbing carbohydrates, and indigestible carbohydrates. The carbohydrate system may include all of the carbohydrate sources present in the nutritional composition such that the nutritional composition does not contain any other carbohydrates sources, or may include only a portion of the carbohydrate sources present in the nutritional composition; that is, in some embodiments there are additional carbohydrate sources present in the nutritional composition in addition to the carbohydrate system as described herein such as, for example, lactose.

Suitable carbohydrates for use in the nutritional powder include simple or complex, lactose-containing or lactose-free, or combinations thereof. Non-limiting examples include hydrolyzed, intact, naturally and/or chemically modified cornstarch, maltodextrin, maltose, glucose polymers, sucrose, corn syrup solids, rice or potato derived carbohydrate, glucose, fructose, lactose, and oligosaccharides such as fructooligosaccharides (FOS) and galacto-oligosaccharides (GOS), insulin, polydextrose, resistant starches, dextrin, and gums (i.e., Arabic), and combinations thereof. The carbohydrate source may be either organic or non-organic in nature.

The carbohydrate systems as described herein comprise specific combinations of individual carbohydrates that have a low glycemic index, generally less than 55.

The carbohydrate systems of the present disclosure include a simple carbohydrate that has a slow rate of digestion. Simple carbohydrates include those carbohydrates that are comprised of monosaccharide sugars or disaccharide sugars. Carbohydrates that have a slow rate of digestion are those carbohydrates that are low glycemic and low insulinemic and are carbohydrates that generally provide a gradual, relatively low rise in blood glucose over time. Suitable simple carbohydrates that have a slow rate of digestion that are suitable for use in the carbohydrate system include isomaltulose, sucromalt, and combinations thereof. Sucromalt may be made from the enzymatic conversion of sucrose and maltose into a fructose and oligosaccharide liquid syrup. The oligosaccharide is comprised of glucoses linked together by alternating 1,3 and 1,6 linkages.

The simple carbohydrate that has a slow rate of digestion may be present in the carbohydrate system in an amount of from about 30% to about 90% by weight, including from about 40% to about 80% by weight, including from about 50% to about 75% by weight, including from about 45% to about 75% by weight, including from about 55% to about 75% by weight, including from about 55% to about 80% by weight, including from about 60% to about 80% by weight, including from about 65% to about 75% by weight. In some specific embodiments, the simple carbohydrate that has a slow rate of digestion may be present in the carbohydrate system in an amount of about 65% by weight, or even about 70% by weight, or even about 71% by weight, or even about 72% by weight, or even about 73% by weight, or even about 75% by weight.

In addition to the simple carbohydrate that has a slow rate of digestion, the carbohydrate system includes a complex carbohydrate. Complex carbohydrates include those carbohydrates that are chains of three or more single sugar molecules linked together. Suitable complex carbohydrates for use in the carbohydrate system include, for example, maltodextrins. In some particularly desirable embodiments, the maltodextrins will have a Dextrose Equivalent of from 9 to 16. Other suitable complex carbohydrates in some embodiments include other sources of starches such as, for example, corn starch, rice starch, wheat starch, and the like.

The complex carbohydrate may be present in the carbohydrate system in an amount of from about 1% to about 15% by weight, including from about 2% to about 12% by weight, including from about 2% to about 10% by weight, including from about 3% to about 10% by weight, including from about 4% to about 10% by weight, including from about 5% to about 10% by weight, including from about 6% to about 10% by weight, including from about 7% to about 10% by weight, and including from about 8% to about 10% by weight. In some particularly desirable embodiments, the complex carbohydrate is present in the carbohydrate system in an amount of about 8% by weight, including about 9% by weight, including about 10% by weight.

In addition to the simple carbohydrate that has a slow rate of digestion and the complex carbohydrate, the carbohydrate systems as described herein additionally include at least one of: (1) a nonabsorbent carbohydrate; and (2) an indigestible oligosaccharide. In some embodiments of the present disclosure, the carbohydrate system will comprise, consist essentially of, or consist of a simple carbohydrate that has a slow rate of digestion, a complex carbohydrate, and a nonabsorbent carbohydrate. In other embodiments of the present disclosure, the carbohydrate system will comprise, consist essentially of, or consist of a simple carbohydrate that has a slow rate of digestion, a complex carbohydrate, and an indigestible oligosaccharide. In still other embodiments of the present disclosure, the carbohydrate system will comprise, consist essentially of, or consist of a simple carbohydrate that has a slow rate of digestion, a complex carbohydrate, a nonabsorbent carbohydrate, and an indigestible carbohydrate. In some embodiments, as noted above, one or more additional carbohydrates, such as lactose, may be present in addition to the carbohydrate system.

The carbohydrate system further includes a nonabsorbent carbohydrate. Nonabsorbent carbohydrates include fibers and other non-absorbable starches that are not substantially absorbed in the upper intestinal tract so that they pass through to the colon where bacteria ferment them into fatty acids that can be absorbed. These fatty acids may act to heal the lining of the colon. Suitable nonabsorbent carbohydrates include inulin, and insoluble dietary fibers, including Fibersol® fibers, including Fibersol® 2E, which is a digestion resistant maltodextrin, Nutriose® , amylose, or other insoluble fibers, and combinations thereof.

The nonabsorbent carbohydrate may be present in the carbohydrate system in an amount of from about 5% to about 25% by weight, including from about 5% to about 20% by weight, including from about 5% to about 19% by weight, including from about 5% to about 18% by weight, including from about 5% to about 17% by weight, including from about 5% to about 16% by weight, including from about 7.0% to about 17% by weight, including from about 10.0% to about 17.0% by weight. In some particularly desirable embodiments, the nonabsorbent carbohydrate is present in the carbohydrate system in an amount of about 12% by weight, including about 14% by weight, including about 16% by weight, and including about 18% by weight.

The carbohydrate system also includes an indigestible carbohydrate. Indigestible carbohydrates are carbohydrates, including some fibers that travel through the colon undigested so as to promote digestion and a healthy bowel. Suitable indigestible carbohydrates include fructooligosaccharides, galactooligosaccharides, trans-galactooligosaccharides, xylooligosaccharides, and/or combinations thereof.

The indigestible carbohydrate may be present in the carbohydrate system in an amount of from about 1.0% to about 18% by weight, including from about 2% to about 17% by weight, including from about 2% to about 15% by weight, including from about 3% to about 15% by weight, including from about 3% to about 14% by weight, including from about 3% to about 13% by weight, including from about 3% to about 12% by weight. In one particularly desirable embodiment, the indigestible carbohydrate is present in the carbohydrate system in an amount of about 3% by weight.

In a particularly desirable embodiment, the carbohydrate system comprises about 71% by weight isomaltulose, about 9% by weight maltodextrin having a DE of 9 to 16, about 4% by weight fructooligosaccharides, and about 16 % by weight Fibersol 2E insoluble dietary fiber.

Generally, the carbohydrate system is included in the nutritional powder in an amount (by weight of the nutritional powder) of from about 5% to about 80%, or from about 10% to about 70%, or from about 10% to about 60%, or from about 20% to about 60%, or from about 20% to about 50%, or from about 30% to about 70%, or from about 30% to about 60%, or from about 40% to about 70% or from about 40% to about 60%, or from about 40% to about 55%, or from about 45% to about 55%, or from about 50% to about 55%, or from about 50% to about 60%, or from about 51% to about 57%. In some embodiments, the carbohydrate system may be included in the nutritional powder in a specific amount of about 5%, about 10%, about 20%, about 30%, about 35%, about 40%, about 45%, about 50%, about 51, about 52%, about 53%, about 54%, about 55%, or even about 60% (by weight of the nutritional powder). The carbohydrate system may be included in the nutritional powder in a higher amount (i.e., greater than about 60%), however such inclusion increases the caloric content of the resulting beverage, which may be undesirable for certain nutritional beverages.

The carbohydrate system of the present disclosure is included in an amount between about 6 grams to about 40 grams/100 kcal, or about 10 grams to about 30 grams/100 kcal, or about 12 grams to about 20 grams/100 kcal of the nutritional powder. In some embodiments, the carbohydrate source is provided in the nutritional powder in an amount of about 12 grams/100 kcal, or about 14 grams/100 kcal, or about 16 g/100 kcal, or about 18 g/100 kcal, or about 20 g/100 kcal.

### NUTRIENT SOURCE

The nutritional powders of the present disclosure comprise sufficient types and amounts of nutrients to meet the targeted dietary needs of the intended user. These nutritional powders therefore include a protein source, a carbohydrate source, and a lipid source (all either organic or non-organic) in addition to vitamins, minerals, and/or other components suitable for use in nutritional powders. Many different sources and types of macronutrients and micronutrients are known and can be used in the nutritional powders of the present disclosure, provided that such nutrients are compatible with the added components in the selected formula, are safe for their intended use, and do not otherwise unduly impair product performance.

Accordingly, the nutritional powders of the present disclosure may further comprise any of a variety of vitamins and minerals in addition to the components described above. The vitamins may be prepared as a premix or may be mixed into the nutritional powder separately. Non-limiting examples of vitamins include vitamin A, vitamin D, vitamin E, vitamin K, thiamine, riboflavin, pyridoxine, vitamin B 12, niacin, folic acid, pantothenic acid, biotin, vitamin C, choline, chromium, carnitine, inositol, salts and derivatives thereof, and combinations thereof. The nutritional powders may further comprise any of a variety of minerals, non-limiting examples of which include calcium, phosphorus, magnesium, iron, zinc, manganese, copper, iodine, sodium, potassium, chloride, and combinations thereof. Alternatively, or in combination with other nutrients, a water dispersible oil soluble vitamin premix could be added to the powder of the present disclosure.

One suitable vitamin premix includes the components found in Table 2.

**TABLE 2**

| A typical vitamin premix profile useful for use in the nutritional powder of the present disclosure. | |
|---|---|
| Vitamin | Amount represented as kg/1000g of product * |
| Lactose | 3-5 |
| Zinc Sulfate Monohydrate | 0-1 |
| Ferrous Sulfate Monohydrate | 0-1 |
| Vitamin E Acetate | 0-1 |
| Niacinamide | 0-.1 |
| Manganese Sulfate Monohydrate | 0-.1 |
| d-calcium Pantothenate | 0-.1 |
| Copper Sulfate Anhydrous | 0-.1 |
| Pyridoxine Hydrochloride | 0-.1 |
| Thiamine Hydrochloride | 0-.1 |
| Riboflavin | 0-.1 |
| Folic Acid | 0-0.01 |
| Vitamin A Palmitate | 0-0.01 |
| Chromium Chloride | 0-0.01 |
| Cholecalciferol | 0-0.01 |
| Sodium Selenate | 0-0.01 |
| d-Biotin | 0-0.001 |
| Phytonadione | 0-0.001 |
| Cyanocobalamin | 0-0.0001 |

| | |
|---|---|
| *All numbers in the chart are proceeded by the term "about." | |

### FLAVOR SOURCE

The nutritional powder of the present disclosure further optionally includes one or more flavoring sources to provide flavoring to the reconstituted beverage. In particular, the flavoring sources preferably impart a palatable flavor to water. The flavoring sources may comprise natural or artificial flavors including fruit, vegetable, botanical flavors and the like. The flavors can be natural or synthetically prepared to simulate flavors derived from natural sources. Further, the flavoring source may comprise one or more flavors either alone, or in combination with other flavor sources. The flavoring sources are preferably supplied in dry form so as to easily be incorporated into the nutritional powder of the present disclosure. Examples of suitable flavoring sources include punch, berry, orange, pineapple, peach, lemon, lime, banana, grape, and the like. Preferably, the flavoring sources do not comprise chocolate or vanilla flavoring similar to those found in prior art shake products due to the unfavorable flavor profile with respect to pregnant women, and the solubility issues presented by chocolate and vanilla flavoring.

The flavoring sources are preferably incorporated into the nutritional powder in an amount of about .01 wt % to about .1 wt %, or about .01 wt % to about .09 wt %, or about .01 wt % to about .08 wt %, or about .01 wt % to about .07 wt %, or about .03 wt % to about .08 wt %.

The ratio of various sources in the nutritional powder is important to help realize the advantages discussed herein. For example, the ratio of the protein source to carbohydrate system in the nutritional powder is about .1:1, or about .2:1, or about .3:1, or about .4:1, or about .5:1, or about .55:1, or about .6:1, or about .65:1, or about .7:1, or about .8:1, or about .9:1, or about 1:1. The ratio of the lipid source to the protein source is about or about .01:1, or about .02:1, or about .03:1, or about .04:1, or about .05:1, or about .06:1, or about .07:1, or about .08:1, or about .09:1, or about .1:1. The ratio of the lipid source to the carbohydrate system is about .001:1, or about .002:1, or about .003:1, or about .004:1, or about .05:1, or about .06:1, or about .07:1, or about .08:1, or about .09:1, or about .1:1.

The nutritional powder is typically formulated utilizing the components described herein in the embodied ranges in the Table 3.

**TABLE 3**

| Various embodiments of the nutritional powder described herein. | | | |
|---|---|---|---|
| Source | Embodiment 1 | Embodiment 2 | Embodiment 3 |
| Protein | 10-40 | 20-40 | 22-27 |
| Carbohydrate | 20-70 | 40-60 | 49-53 |
| Lipid | Less than 5 | Less than 3 | About 1 |

| | | | |
|---|---|---|---|
| Amounts expressed as weight % of the total nutritional powder. All amounts are preceded by the "about." | | | |

### PRODUCT FORM

The nutritional powders of the present disclosure may have any caloric density suitable for the targeted or intended patient population, or provide such a density upon reconstitution of the nutritional powder. The nutritional powders of the present disclosure are typically in the form of flowable or substantially flowable particulate compositions, or at least particulate compositions that can be easily scooped and measured with a spoon or similar other device, wherein the compositions can easily be reconstituted by the intended user with a suitable aqueous fluid, typically water, to form a liquid nutritional supplement. Powder embodiments include spray dried, dry mixed or other known or otherwise effective particulate form. The quantity of a nutritional powder required to produce a volume suitable for one serving may vary.

The nutritional powders of the present disclosure may be packaged and sealed in single or multi-use containers, and then stored under ambient conditions for up to about 36 months or longer, more typically from about 12 to about 24 months. For multi-use containers, these packages can be opened and then covered for repeated use by the ultimate user, provided that the covered package is then stored under ambient conditions (e.g., avoid extreme temperatures and moisture) and the contents used within about one month or so. One particularly preferred packaging configuration is single-use, single-serve packets. Each packet preferably contains a sufficient amount of nutritional powder suitable for use in a single serving of a beverage. For example, depending on the desired nutrient and energy profiles of the reconstituted beverage, the serving size for each packet may include about 70 grams of powder, or about 60 grams, or about 50 grams, or about 40 grams, or about 30 grams, or about 20 grams, or about 15 grams, or about 10 grams, or about 5 grams.

### METHOD OF MANUFACTURE

The nutritional powders of the present disclosure may be prepared by any known or otherwise effective technique suitable for making and formulating a nutritional powder or similar other supplemental powder, variations of which may depend upon variables such as the ingredient combination, packaging and container selection, and so forth, for the desired nutritional powder. Such techniques and variations for any given supplemental powder are easily determined and applied by one of ordinary skill in the nutritional powder arts.

The nutritional powders of the present disclosure, including the exemplified powders described hereinafter, can therefore be prepared by any of a variety of known or otherwise effective formulation or manufacturing methods. One such method described hereinbelow involves dry blending the powder components at specified mixing conditions. Other methods may involve the initial formation of an aqueous slurry containing carbohydrates, proteins, lipids, stabilizers or other formulation aids, vitamins, minerals, or combinations thereof. The slurry is emulsified, pasteurized, homogenized, and cooled. Various other solutions, mixtures, or other materials may be added to the resulting emulsion before, during, or after further processing. This emulsion can then be further diluted, heat-treated, and subsequently dried via spray-drying or the like to produce a nutritional powder. Other suitable methods of producing a nutritional powder are described, for example, in U.S. Pat. No. 6,365,218 (Borschel, et al.), U.S. Pat. No. 6,589,576 (Borschel, et al.), U.S. Pat. No. 6,306,908 (Carlson, et al.), U.S. Patent Application No. 20030118703 (Nguyen, et al.), all of which are hereby incorporated by reference.

### NON-HYGROSCOPIC COMPONENTS

The nutritional powder of the present disclosure preferably includes favorable solubility properties and does not clump if exposed to the ambient atmosphere. Powders of the prior art typically accomplish the aforementioned goals by using anti-caking agents because the powders utilize hygroscopic materials, which tend to become damp and "cake" when exposed to moisture. In contrast, the nutritional powders of the present disclosure preferably include at least one non-hygroscopic component, which is a component that does not readily absorb moisture. The hygroscopic nature of a material can be measured by various properties relating to the moisture retention of the material. Examples of suitable non-hygroscopic components suitable for use in the powder of the present disclosure include magnesium phosphate (in lieu of magnesium chloride) and choline bitartrate premix (in lieu of choline chloride), and citric acid anhydrous (in lieu of citric acid).

Nutritional powders disclosed herein that include one or more non-hygroscopic components are typically characterized by lower mean cake strengths than nutritional formulas of a similar composition using hygroscopic components. Cake strength is the measure of powder compaction, which directly impacts the dissolution of the powder in an aqueous liquid. The lower the cake strength value, the better the dissolution properties of the nutritional powder. One way similar levels of cake strength are typically realized is through the use of non-caking agents. Thus, the powder of the present disclosure provides a desirable cake strength without the use of non-caking agents. Preferably, the mean cake strength of the nutritional powders of the present disclosure is less than about 55 g, or less than about 50 g, or less than about 45 g, or less than about 43 g, or less than about 40 g, or less than about 35 g.

### PROPERTIES OF THE NUTRITIONAL POWDERS

The nutritional powder of the present disclosure may be characterized using any number of quantitative measurements. One such measurement is bulk density, which is defined as the mass of the particles of the powder divided by the volume the particles occupy. The (poured) bulk density of the powder is between about .2 g/cc to about .10 g/c, or about .3 g/cc to about .9 g/cc, or between about .4 g/cc and about .7 g/cc when measured freely settled. The (tapped) bulk density of the powder is between about .6 g/cc and about .10 g/cc, or between about .7 g/cc to about .9 g/cc, or about .8 g/cc when measured after compaction (i.e., vibration of the container that the powder is contained within).

### OPTIONAL COMPONENTS

The nutritional powders of the present disclosure may further comprise other optional components that may modify the physical, chemical, aesthetic or processing characteristics of the formulas or serve as pharmaceutical or additional nutritional sources when used in the targeted population. Many such optional components are known or other suitable for use in food and nutritional products and may also be used in the nutritional powders of the present disclosure, provided that such optional materials are compatible with the essential materials described herein, are safe for their intended use, and do not otherwise unduly impair product performance. Non-limiting examples of such optional components include preservatives, anti-oxidants, emulsifying agents, buffers, colorants, flavors, nucleotides, and nucleosides, probiotics, prebiotics, lactoferrin, and related derivatives, thickening agents and stabilizers, and so forth.

A further optional component includes beta-hydroxy-beta-methylbutyrate (HMB). HMB is a metabolite of the essential amino acid leucine and has the IUPAC name 3-hydroxy-3-methylbutanoic acid. A preferred form of HMB is the calcium salt of HMB, also designated as Ca-HMB, which is most typically the monohydrate calcium salt. The HMB used can come from any source. Calcium HMB monohydrate is commercially available from Technical Sourcing International (TSI) of Salt Lake City, Utah. Although calcium monohydrate is the preferred form of HMB for use herein, other suitable sources include HMB as a free acid, a salt, an anhydrous salt, an ester, a lactone, or other product forms that provide a bioavailable form of HMB suitable for administration. Nonlimiting examples of suitable salts of HMB for use herein include HMB salts, hydrated or anhydrous, of sodium, potassium, chromium, calcium, or other non-toxic salt forms.

### RECONSTITUTED BEVERAGE

The nutritional powder of the present disclosure is adapted to be reconstituted using an aqueous liquid. Preferably, the aqueous liquid is water. However, it is contemplated that other types of liquids may be used such as, for example, juice, tea, coffee, and the like. The aqueous liquid may contain flavoring or may be flavorless. The nutritional powder may be added into a container having the liquid previously disposed therein or may be added to an empty container, with the liquid being added after the powder. The beverage is preferably prepared by mixing, stirring, shaking, or any other method that assists in dissolving the powder into the liquid. Once the powder is dissolved, the reconstituted beverage exhibits the desirable characteristics described herein.

The reconstituted beverage comprises the various components discussed herein according to the following embodiment shown in Table 4, which comprises 47.5 g of nutritional powder dissolved in 8 ounces of water.

**TABLE 4**

| An embodiment of a reconstituted beverage formed from the nutritional powder described herein. | | |
|---|---|---|
| Component | Amount | Amount Per Ounce |
| Energy | 148.5 kcal | 18.6 kcal |
| Protein | 12 g | 1.5 g |
| Lipids | .5 g | .0625 g |
| DHA | 100 mg | 12.5 mg |
| Carbohydrate | 24 g | 3 g |
| Sugar | 16.3 g | 2 g |
| Fiber | 1.6 g | .2 g |

| | | |
|---|---|---|
| All amounts are preceded by "about." | | |

The reconstituted beverage includes a favorable solubility profile. The time that the powder dissolves in the liquid is dependent on multiple factors including serving size, liquid size, amount of powder, temperature of the liquid, and such. In particular, the powder preferably dissolves such that the liquid is substantially homogenous after mixing over a time period of less than about 500 seconds.

The reconstituted beverage is preferably translucent, meaning that the liquid at least allows light to pass through the beverage. A standard color scale of 0-100 and Agtron Color Analyzer M-45 is used to determine the relative translucency of the reconstituted beverage and is known to those in the art. Translucent products are characterized by lower number on the color scale (i.e., closer to 0). More opaque products are characterized by larger number on the color scale (i.e., closer to 100). Beverages of the present disclosure are preferably characterized by a number of less than about 40 on the color scale, or less than about 30 on the color scale, or less than about 20 on the color scale, or less than about 15 on the color scale, or less than about 10 on the color scale. In one embodiment, the beverage is substantially translucent and is characterized by a number on the color scale of about 10.

The reconstituted beverage preferably includes a balanced pH profile suitable for pregnant women or other intended consumers of the reconstituted beverage. For example, the beverage is preferably acidic and is defined by a pH between about 2 and about 6, or about 2 to about 5, or about 2 to about 4, or about 3 to about 6, or about 3 to about 5, or about 3 to about 4, or about 4 to about 5, as measured at about typical room conditions (i.e., about 20 °C to about 25 °C).

The reconstituted beverage further includes a favorable viscosity in accordance with the advantages described herein. The viscosity of the reconstituted beverage is preferably less than about 20 cp, or less than about 17 cp, or less than about 15 cp, or less than about 12 cp, or less than about 10 cp, or less than about 9 cp, or less than about 8 cp, or less than about 7 cp, or less than about 6 cp, or less than about 5 cp. In one embodiment, the viscosity of the reconstituted liquid is about 6 cp.

The translucent reconstituted beverage of the present disclosure provides a unique advantage over prior art nutritional supplements by being able to provide sufficient amounts of protein, carbohydrates, vitamins, and minerals, while at the same time having a low fat content (less than about 1 %) and having a low calorie content (less than about 200). The caloric profile is closely regulated due to the unique mixture of sources in the nutritional powder and the corresponding reconstituted beverage. The reconstituted beverage preferably includes less than about 200 calories per 8 oz serving, or less than about 190 calories per 8 oz serving, or less than about 180 calories per 8 oz serving, or less than about 170 calories per 8 oz serving, or less than about 160 calories per 8 oz serving, or less than about 150 calories per 8 oz serving. In one embodiment, the nutritional beverage includes between about 100 and about 170 calories per 8 oz serving, or between about 120 and about 150 calories per 8 oz serving, or between about 140 and about 150 calories per 8 oz serving. The translucent nutritional beverage preferably comprises between about 8 to about 28 total kcal/ounce, or about 10 to about 26 total kcal/ounce, or about 12 to about 24 total kcal/ounce.

### EXAMPLES

The following examples further describe and demonstrate specific embodiments within the scope of the present disclosure. The examples are given solely for the purpose of illustration and are not to be construed as limitations of the present disclosure, as many variations thereof are possible without departing from the spirit and scope of the disclosure. All exemplified amounts are weight percentages based upon the total weight of the composition, unless otherwise specified.

### Example 1

The following examples illustrate powdered nutritional supplements of the present disclosure, including methods of making and using the powdered nutritional supplements. Formula components for the batch are listed in Table 5.

**TABLE 5**

| An exemplary embodiment of the nutritional powder described herein. | |
|---|---|
| Component Amount | represented as kg/1000g of product * |
| Isomaltulose | 372 |
| Whey Protein Isolate (Hilmar 9420) | 301 |
| Fibersol 2 | 84.3 |
| Citric Acid | 49.5 |
| Maltrin M200 | 45.1 |
| Potassium Phosphate Monobasic | 27.1 |
| Calcium Carbonate | 26.7 |
| Fructooligosaccharides | 19.3 |
| Omega-3 Powder | 17.5 |
| Magnesium Phosphate | 16.6 |
| Sodium Citrate | 8.84 |
| Choline Bitartrate Premix | 6.95 |
| Potassium Chloride | 6.39 |
| Lactose | 7.02 |
| Zinc Sulfate Monohydrate | .683 |
| Ferrous Sulfate Monohydrate | .435 |
| Vitamin E Acetate | .430 |
| Niacinamide | .0628 |
| Manganese Sulfate Monohydrate | .0586 |
| d-calcium Pantothenate | .0561 |
| Copper Sulfate Anhydrous | .0307 |
| Pyridoxine Hydrochloride | .0294 |
| Thiamine Hydrochloride | .0191 |
| Riboflavin | .0111 |
| Folic Acid | .00867 |
| Vitamin A Palmitate | .00606 |
| Chromium Chloride | .00343 |
| Cholecalciferol | .00291 |
| Sodium Selenate | .00199 |
| d-Biotin | .000862 |
| Phytonadione | .000443 |
| Cyanocobalamin | .0000467 |
| Punch Flavor | 4.63 |
| Ascorbic Acid | 2.51 |
| Orange Flavor | 2 |
| Anthocyanin Powder Color | .670 |
| Pineapple Flavor | .499 |
| Acesulfame Potassium | .469 |
| Sucralose Powder | .362 |
| Natural Carotene Powder Color | .206 |
| Potassium Iodide | .00100 |

The exemplified powder of Table 5 is prepared by making at least two separate blends that are blended together and packaged.

A vitamin premix is prepared and includes lactose, zinc sulfate monohydrate, ferrous sulfate monohydrate, vitamin E acetate, niacinamide, manganese sulfate monohydrate, manganese sulfate monohydrate, d-calcium pantothenate, copper sulfate anhydrous, pyridoxine hydrochloride, thiamine hydrochloride, riboflavin, folic acid, vitamin A palmitate, chromium chloride, cholecalciferol, sodium selenate, d-Biotin, phytonadione, and cyanocobalamin. The isomaltulose, choline bitartrate premix, potassium phosphate monobasic, and vitamin premix are added to a blender and mixed for at least 2 minutes at a rotational speed of about 18 rpm to form the initial mix. Additionally, the Maltrin M200 is divided into two portions. A first portion comprises about 17.7% of the total and a second portion comprises about 82.3% of the total amount of Maltrin M200.

A secondary premix is formed by adding the first portion of Maltrin M200, potassium iodide, pineapple flavor, acesulfame potassium, sucralose powder, natural carotene powder color, and anthocyanin powder color. The secondary premix is added to a separate container and mixed. It should be noted that a natural high intensity sweetener such as Stevia® or Monk fruit powder could be substituted for the sucralose powder.

The secondary premix is added to the blender in addition to the second portion of Maltrin 200, orange flavor, sodium citrate, ascorbic acid, potassium chloride, calcium carbonate, magnesium phosphate, fructooligosaccharides, Fibersol 2, citric acid, and punch flavor. These components were added to the blender on top of the initial mix in the order listed herein. The calcium carbonate and magnesium phosphate dibasic were filtered through a sieve to remove clumps. After all of the secondary premix and additional components are added to the blender, the mixture is blended for at least 2 minutes at a rotational speed of about 18 rpm.

Finally, the Omega-3 powder and whey protein isolate (Hilmar 9420) are added evenly to the top of the blender onto the other blended components. The mixture is blended for at least 4 minutes at a rotational speed of about 18 rpm. The resulting nutritional powder is then packaged in manners known in the art.

The resulting powdered nutritional formula is then used to provide a supplemental, primary, or sole source of nutrition to pregnant women or other appropriate individuals.

### RECONSTITUTED BEVERAGE

The nutritional powder disclosed in Table 5 herein was reconstituted according to the following method. In particular, 47.5 g of the nutritional powder was added to 8 fl oz of purified water. The powder was stirred until substantially dissolved (for about 450 seconds) and until the liquid is homogenous. The homogenous liquid containing the dissolved powder forms the reconstituted beverage having the characteristics described herein.

### Example 2

A study was conducted to evaluate and compare the physical appearance (i.e., translucency) of reconstituted beverages formed from the powdered nutritional supplements containing a protein source, a lipid source, a carbohydrate system, and additives as described herein. The nutritional supplement of Table 5 was reconstituted in 8 oz of water pursuant to the method described above and was compared to a typical conventional shake-type protein supplement, Ensure Vanilla (liquid form) made by Abbott Nutrition (Columbus, Ohio).

One of the preferred ways to measure translucency of a product is to measure the spectral distribution of light. Changes in any of the gloss, transparency, haziness, and/or turbidity will affect the manner in which the light is reflected or transmitted through the product. Any changes of the physical or chemical properties of a product that comprises a substantially uniform consistency may be measured. A preferred device used to measure reflectance is a reflectance spectrophotometer. The reflectance spectrophotometer measures reflective spectral characteristics in monochromatic spectral frequencies. Standard reflection disks are used to calibrate the reflectance spectrophotometer and the numerical reading taken on each sample is quantitatively comparable to the calibration standards. Adjustments may be provided to calibrate the zero and one hundred (100) points of the spectrophotometer at any desired reflectance level.

The spectrometer provides a measurement when a sample cup containing a homogeneous product is placed over the viewing port. At that point, light is reflected from the bottom of the sample cup and passes through a narrow band pass filter, one of the interference filters, and is focused onto the photodiode sensor. The photodiode provides a current signal which is proportional to the amount of reflected light from the sample.

The spectrophotometer apparatus is used to measure the distribution of light and includes an optical viewer and a control console. The spectrophotometer apparatus comprises monochromatic light sources, interference filters, a photodiode and power supply. The spectral modes and monochromatic wavelengths employed are: blue (436nm), green (546nm), yellow (585nm), and red (640nm). Light reflectance at the selected wavelength is read from the digital display. The spectrophotometer apparatus includes a control console and viewer (an Autocal Control Console and Viewer, Model M-45), Calibration Disks 00 and 90 (daily operation), sample cups, a transmission disk, a transmission ring, a bolt and wingnut, and reference calibration disks 00, 90, 10 and 44, supplied by Agtron Inc., (Reno, Nevada, United States).

Prior to testing, the spectrophotometer apparatus was prepared and calibrated in manners known in the art. In particular, the spectrophotometer was turned on prior to use and was positioned in the on position for at least 30 to 60 minutes for the apparatus to warm up. All parts of the apparatus, disks, rings, and sample cups were cleaned prior to use and free from scratches, dirt, dust, fingerprints, marks, or other surface irregularities.

The samples were prepared and tested according to the following methodology. First, a powder having the components of Table 5 was prepared in accordance with the methodology described herein above. Approximately 47.5 g of the powder was added to approximately 8 oz of distilled deionized water. The sample was stirred until the powder was dissolved in the liquid and the sample was substantially homogeneous. A transmission ring was placed into a sample cup and the sample was poured into the sample cup over the transmission ring in an amount sufficient to cover the transmission ring. The transmission disk was added to the sample cup and held in place with a bolt and wingnut. The sample was then analyzed by the spectrophotometer. A comparison sample of the laboratory water sample was also tested in a manner consistent with the testing described herein.

The sample that was compared to the nutritional powder of the present disclosure was Ensure Vanilla ready-to-drink shake available from Abbott Nutrition. A container having the sample was opened and the sample was stirred until homogenous. The sample was poured into the sample cup until the sample cup was about 50% full. The sample was analyzed in accordance with the above.

In addition to translucency, various characteristics were measured to define the reconstituted beverage as compared to other beverages for the sake of comparison. For example, the pHs of the beverages in Table 6 were measured at about room temperature (about 20° C to about 25° C using a Mettler S20 pH meter. Additionally, the viscosities of the beverages in Table 6 were measured at room temperature with a viscometer (Model DV-II+ PRO supplied by Brookfield Engineering Laboratories).

**TABLE 6**

| Results oftranslucency test, pH test, and viscosity test between a reconstituted beverage of the present disclosure, a nutritional drink known in the art, and water. | | | |
|---|---|---|---|
| Sample | Agtron Scale (1-100) | pH | Viscosity (cps) |
| Nutritional Powder of Present Disclosure | 10.2 | 4.24 | 6 |
| Water | 0 | 7 | 1 |
| Ensure Vanilla Shake (Liquid Form) | 46 | 6.76 | 24.8 |

The data as set forth herein shows that a beverage formed from the nutritional powder of the present disclosure is substantially more translucent than a thicker nutritional beverage. In particular, the nutritional powder measured approximately 10.2 on the Agtron color scale as opposed to the Ensure Vanilla shake product, which measured 46 on the Agtron color scale. Further, the reconstituted beverage includes an acidic pH as compared to the Ensure product. Still further, the viscosity of the reconstituted beverage is significantly lower than that of the prior art nutritional product.

### Example 3

A further study was conducted to evaluate and compare the cake strength of powdered nutritional supplements containing a protein source, a lipid source, a carbohydrate source, and non-hygroscopic components as discussed herein. This nutritional supplement using non-hygroscopic components was compared to a similar formulation that substituted hygroscopic components for various components. In particular, the formulation from Table 5 was used and compared to a control formulation similar to Table 5, except the non-hygroscopic components magnesium phosphate and choline bitartrate premix were used in lieu of magnesium chloride and choline chloride, respectively.

Approximately 100g of the nutritional formula shown in Table 5 and the control formula were formulated in accordance with the method described hereinabove. The formulas were prepared and placed separately into two conventional bowls. The bowls were exposed to the same atmospheric conditions in the laboratory. For example, the temperature was during the test was approximately room temperature and the laboratory was under standard laboratory conditions typical of those in Columbus, Ohio. The nutritional formula samples were exposed for 3 days.

As shown in FIG. 1, the data as set forth herein shows that the control nutritional powder having hygroscopic components showed a propensity to clump significantly more than the nutritional formula of the present invention. In particular, after numerous days exposed to standard laboratory conditions, clumping was plainly visible in the control nutritional powder having hygroscopic components. Further, the mean cake strength was measured for each of the nutritional formulas using a texture analyzer with a powder module attachment manufactured by Stable Microsystems (Surrey, United Kingdom). The cake strength was found to be about 41.1 g for the formula of the present disclosure versus about 64.5 g for the control formula.

## Claims

1. A nutritional powder, comprising:
(a) a protein source in an amount between about 2 grams to about 15 grams/100 kcal of the nutritional powder;
(b) a carbohydrate system in an amount between about 12 to about 20 grams/100 kcal of the nutritional powder, the carbohydrate system provided as a carbohydrate blend that includes from about 60% to about 70% by weight slow rate of digestion simple carbohydrate, from about 6% to about 10% by weight complex carbohydrate, from about 5% to about 20% by weight nonabsorbent carbohydrate, and from about 2% to about 15% by weight indigestible carbohydrate; and
(c) a lipid source in an amount between about 0.2 to about 0.8 grams/100 kcal of the nutritional powder, wherein the lipid source further includes about 50 to about 100 milligrams/100kcal of docosahexaenoic acid (DHA).

2. The nutritional powder of claim 1, wherein the protein source comprises at least one of whey protein isolate, soy protein, potato protein, or combinations thereof.

3. The nutritional powder of claim 1, wherein the protein source comprises at least 80% protein by dry weight, less than about 5% lactose, and less than about 1% fat.

4. The nutritional powder of claim 1, wherein the protein source is present in the nutritional powder in an amount of about 5% to about 40% by weight of the nutritional powder.

5. The nutritional powder of claim 1, wherein the lipid source does not comprise more than 4% by dry weight of the nutritional powder.

6. The nutritional powder of claim 1, wherein the carbohydrate blend comprises isomaltulose, maltodextrin, fructooligosaccharides, and insoluble dietary fiber.

7. The nutritional powder of claim 1 further including a flavoring source including at least one flavoring of punch, berry, orange, pineapple, peach, lemon, lime, banana, grape, and/or combinations thereof.

8. The nutritional powder of claim 1, wherein the nutritional powder is **characterized by** a cake strength of between about 35 grams to about 45 grams.

9. The nutritional powder of claim 1, wherein the ratio of the protein source to the carbohydrate system is about 3:5.

10. The nutritional powder of claim 1, wherein the powder includes at least one non-hygroscopic component.

11. The nutritional powder of claim 1, where the (poured) bulk density of the powder is between about .2 g/cc and about .10 g/c, or about .3 g/cc to about .9 g/cc, or about .4 to about .7 g/cc when measured freely settled.

12. A translucent nutritional beverage, comprising:
(a) a protein source in an amount between about 6 grams to about 10 grams/100 kcal of the beverage;
(b) a carbohydrate system in an amount between about 12 to about 20 grams/100 kcal of the beverage, wherein the carbohydrate system provided as a carbohydrate blend that includes from about 60% to about 70% by weight slow rate of digestion simple carbohydrate, from about 6% to about 10% by weight complex carbohydrate, from about 5% to about 20% by weight nonabsorbent carbohydrate, and from about 2% to about 15% by weight indigestible carbohydrate; and
(c) a lipid source in an amount between about 0.2 to about 0.8 grams/100 kcal of the beverage.

13. The translucent nutritional beverage of claim 12, wherein the beverage includes about 1.5 grams of the protein source per each ounce of water.

14. The translucent nutritional beverage of claim 12, wherein the beverage is **characterized by** a number on the Agron color scale of about 10.

15. The translucent nutritional beverage of claim 12, wherein the beverage is **characterized by** a pH of between about 2 and about 6.

16. The translucent nutritional beverage of claim 12, wherein the viscosity of the beverage is less than about 10 cp.

17. A method of reconstituting a powder to form a substantially translucent nutritional beverage, comprising the step of:
dissolving a nutritional powder in an aqueous liquid, wherein the powder includes a protein source in an amount between about 6 grams to about 10 grams/100 kcal of the nutritional powder, a carbohydrate system in an amount between about 12 to about 20 grams/100 kcal of the nutritional powder, and a lipid component in an amount between about 0.2 to about 0.8 grams/100 kcal of the nutritional powder to yield the translucent nutritional beverage that has between about 12 to about 24 total kcal/ounce.

18. The method of claim 17, wherein the aqueous liquid is water.

19. The method of claim 17, wherein the substantially translucent nutritional beverage includes about 1.5 grams per oz of the protein source.

20. The method of claim 17, wherein the substantially translucent nutritional beverage is **characterized by** a pH of less than about 5 and a viscosity of less than about 6 cps.
